# EUROPEAN PATENT SPECIFICATION

(11) **EP 2 395 674 B1**
(45) Date of publication and mention of the grant of the patent: **22.04.2015**
(21) Application number: 10740902.1
(22) Date of filing: 30.01.2010
(51) Int. Cl.: H04B 1/713, H04B 1/715

(54) **METHOD, DEVICE AND SYSTEM FOR ADJUSTING MOBILE ALLOCATION INDEX OFFSET**
VERFAHREN, VORRICHTUNG UND SYSTEM ZUR ANPASSUNG EINES MOBILEN ZUWEISUNGSINDEXVERSATZES
PROCÉDÉ, DISPOSITIF ET SYSTÈME POUR AJUSTER LE DÉCALAGE D'INDICE D'ATTRIBUTION MOBILE

(30) Priority: 10.02.2009 CN 200910077424
(43) Date of publication of application: 14.12.2011
(73) Proprietor: Huawei Technologies Co., Ltd., Longgang District Shenzhen, Guangdong 518129 (CN)
(72) Inventor: LUO, Chao, Guangdong 518129 (CN); LIN, Jie, Guangdong 518129 (CN); TAN, Bin, Guangdong 518129 (CN)
(74) Representative: Körber, Martin Hans
(86) International application number: PCT/CN2010/070440
(87) International publication number: WO 2010/091613

(56) References cited:
- WO-A1-01/63785
- WO-A1-2005/034378
- WO-A1-2008/130300
- CN-A- 1 864 342
- US-A1- 2007 104 175
- TELEFON AB LM ERICSSON: "Frequency Hopping Schemes for MUROS", 3GPP DRAFT; GP-080636, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Malaga; 20080506, 6 May 2008 (2008-05-06), XP050019940, [retrieved on 2008-05-06]
- HUAWEI TECHNOLOGIES CO ET AL: "Discussions and Suggestions on Frequency Hopping Schemes for VAMOS", 3GPP DRAFT; GP-090086 DISCUSSIONS AND SUGGESTIONS ON FREQUENCY HOPPING SCHEMES FOR VAMOS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Malta; 20090216, 11 February 2009 (2009-02-11), XP050414428, [retrieved on 2009-02-11]

## Description

### FIELD OF THE INVENTION

The present invention relates to the field of communications technologies, and in particular, to a method, device, and system for adjusting a mobile allocation index offset (MAIO).

### BACKGROUND OF THE INVENTION

An MAIO hopping solution is a frequency hopping solution in a multi-user reusing one slot (MUROS) technology, and the basic idea of the solution is: disorder frequency reuse relationships of mobile stations (MSs), namely, MUROS users, on the time axis to implement interference diversity between MUROS users in a cell, and between MUROS users and non-MUROS users.

During the process of implementing the MAIO hopping solution in the MUROS technology, because frequency reuse relationships of MUROS users are random, an MUROS user reuses frequencies with other MUROS users randomly, which may cause serious co-channel interference. As a result, the fluctuation of communication link performance with time increases, stability of signaling channels is reduced, and the call quality of the MUROS user is affected.

WO 2005/034378 A1 relates to a method and a system for frequency offset hooping in a radio network. In the method and system, a frequency hopping sequence generator system for use in a radio telecommunications system utilizes variable frequency offsets to determine a frequency hopping sequence for use in communication between a mobile station and a network node. The frequency hopping sequence generator system comprises a frequency offset hopping generator which chooses the variable frequency offsets so that the frequency hopping sequence provides intra-cell (or adjacent channel) interference diversity.

### SUMMARY OF THE INVENTION

Embodiments of the present invention provide a method, device, and system for adjusting an MAIO for the purpose of reducing co-channel interference during the process of implementing the MAIO hopping solution in the MUROS technology, reducing fluctuation of communication link performance with time, and improving stability of signaling channels.

In one aspect, an embodiment of the present invention provides a method for adjusting an MAIO. The method includes:
determining, by a BSS, standard frame selection information and a preset MAIO wherein the standard frame selection information comprises: a start frame number and an interval value; and
sending, by the BSS, the standard frame selection information and the preset MAIO so as to enable an MS to select a standard frame according to the standard frame selection information and set the preset MAIO to be an MAIO of the MS in the standard frame wherein the to select a standard frame according to the standard frame selection information comprises: to select, starting from a start frame corresponding to the start frame number, an ordinary frame after an ordinary frame that is at an interval of the interval value as a standard frame, and wherein all frames are ordinary frames except the standard frames.

In another aspect, an embodiment of the present invention provides another method for adjusting an MAIO. The method includes:
obtaining, by a MS, standard frame selection information and a preset MAIO;
selecting, by the MS, a standard frame according to the standard frame selection information; and
setting, by the MS, the preset MAIO to be an MAIO of the MS in the standard frame wherein the standard frame selection information comprises: a start frame number and an interval value; and the selecting the standard frame according to the standard frame selection information comprises: selecting, starting from a start frame corresponding to the start frame number, an ordinary frame after an ordinary frame that is at an interval of the interval value as a standard frame and wherein all frames are ordinary frames except the standard frames.

In still another aspect, an embodiment of the present invention provides a base station subsystem (BSS). The BSS includes:
a determining module, configured to determine standard frame selection information and a preset MAIO, wherein the standard frame selection information comprises: a start frame number and an interval value; and
a sending module, configured to send the standard frame selection information and the preset MAIO so as to enable an MS to select a standard frame according to the standard frame selection information and set the preset MAIO to be an MAIO of the MS in the standard frame, wherein the to select a standard frame according to the standard frame selection information comprises: to select, starting from a start frame corresponding to the start frame number, an ordinary frame after an ordinary frame that is at an interval of the interval value as a standard frame and wherein all frames are ordinary frames except the standard frames.

In another aspect, an embodiment of the present invention provides an MS. The MS includes:
an obtaining module, configured to obtain standard frame selection information and a preset MAIO;
a selecting module, configured to select a standard frame according to the standard frame selection information; and
a setting module, configured to set the preset MAIO to be an MAIO of the MS in the standard frame;
wherein the standard frame selection information comprises: a start frame number and an interval value; and the selecting module is further configured to select, starting from a start frame corresponding to the start frame number, an ordinary frame after an ordinary frame that is at an interval of the interval value as a standard frame and wherein all frames are ordinary frames except the standard frames.

During the process of implementing the MAIO hopping solution in the MUROS technology, the MS in embodiments of the present invention selects a standard frame according to the standard frame selection information obtained from the BSS, and sets the preset MAIO obtained from the BSS to be the MAIO of the MS in the standard frame. In this way, the preset MAIO in the optimum frequency reuse relationship can be set to be the MAIO of the MS in the standard frame. Co-channel interference during the process of implementing the MAIO hopping solution in the MUROS technology is reduced, fluctuation of communication link performance with time is reduced, stability of signaling channels is improved, and therefore the call quality of the MS is guaranteed.

### BRIEF DESCRIPTION OF THE DRAWINGS

To make the technical solution of the present invention or the prior art clearer, the accompanying drawings for illustrating the embodiments of the present invention or the prior art are described below. Apparently, the accompanying drawings are exemplary only, and those skilled in the art can derive other drawings from such accompanying drawings without creative efforts.
FIG. 1 is a flowchart of a method for adjusting an MAIO according to a first embodiment of the present invention;
FIG. 2 is a flowchart of another method for adjusting an MAIO according to a second embodiment of the present invention;
FIG. 3 is a flowchart of another method for adjusting an MAIO according to a third embodiment of the present invention;
FIG. 4 is a schematic structural diagram of a BSS according to a fourth embodiment of the present invention;
FIG. 5 is a schematic structural diagram of an MS according to a fifth embodiment of the present invention; and
FIG. 6 is a schematic structural diagram of a system for adjusting an MAIO according to a sixth embodiment of the present invention.

### DETAILED DESCRIPTION OF THE EMBODIMENTS

The technical solution of the present invention is described in detail with reference to embodiments and the accompanying drawings. Apparently, the embodiments are only exemplary embodiments of the present invention and the present invention is not limited to such embodiments. Other embodiments that those skilled in the art derive from the embodiments of the present invention also fall within the scope of protection of the present invention.

The action of two MSs reusing a same timeslot is known as frequency reuse or pairing; according to the conventional practice of describing a constellation map, the MS on the first sub-channel is referred to as an "I-channel MS" and the MS on the second sub-channel is referred to as a "Q-channel MS". When more than one MS reuses a timeslot in the MUROS technology mode, the timeslot is in "MUROS mode". In prior MUROS, generally, and I channel can be accessed by a conventional MS, but a Q channel must be accessed by an MS that implements the MUROS technology. Embodiments of the present invention are based on the implementation of the MAIO hopping solution in the MUROS technology, and the basic idea of the MAIO hopping solution is disordering frequency reuse relationships of MSs on the time axis. Specifically, the solution is: divide the MSs in a cell into two sets; set 1 includes all MSs not in the MUROS technology mode and all 1-channel MSs, and set 2 includes other MSs, namely, all Q-channel MSs. The MSs of set 1 and set 2 use the same mobile allocation (MA) and the same hopping sequence number (HSN). The MSs of set 1 calculate a mobile allocation index (MAI) according to the conventional mode (3GPP TS 45.002), while the way in which the MSs of set 2 calculate the MAI is a little different. That is, the MSs of set 2 do not use the MAIO allocated fixedly any longer, but change the MAIO every time the MAI is calculated, which means that the MSs of set 2 use MAIO hopping. The method for adjusting an MAIO in embodiments of the present invention is adjusting the MAIO that is generated by using the MAIO hopping solution.

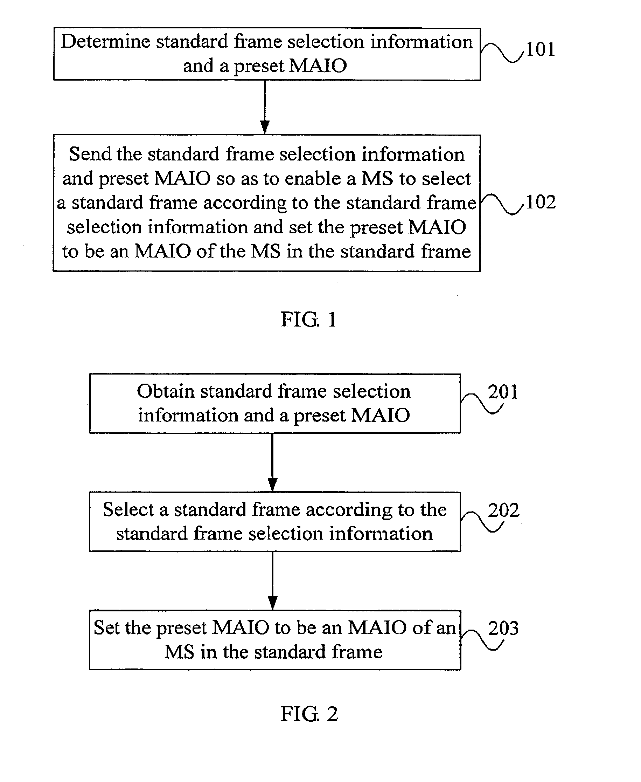

FIG. 1 is a flowchart of a method for adjusting an MAIO according to a first embodiment of the present invention. As shown in FIG. 1, the method may include the following steps:
101. Determine standard frame selection information and a preset MAIO.
102. Send the standard frame selection information and the preset MAIO so as to enable a MS to select a standard frame according to the standard frame selection information and set the preset MAIO to be an MAIO of the MS in the standard frame.

In this embodiment, frames may be classified into two types: ordinary frames and standard frames. That is, all frames except the standard frames are ordinary frames. By setting the preset MAIO to be the MAIO of the MS in the standard frame, periodic regression of the optimum pairing relationship determined by a BSS is implemented, therefore improving stability of signaling channels and reducing the risk of call drop caused by random pairing.

The standard frame selection information and preset MAIO in this embodiment are determined by the BSS; the BSS can determine, according to measurement of the radio environment in the cell, an optimum pairing relationship (frequency reuse relationship) for each MS and the preset MAIO of each MS that is used for implementing the optimum pairing relationship. Specifically, the optimum pairing relationship for the MS may be determined according to a communication parameter of the MS that reflect the call quality, for example, a carrier-to-interference ratio (CIR), path loss (PL), received signal quality (RXQUAL), a received signal level (RXLEV), and cell load. The standard frame selection information may include a start frame number and an interval value so that the MS can, starting from the start frame corresponding to the start frame number, select an ordinary frame after an ordinary frame that is at an interval of the interval value as a standard frame.

During the process of implementing the MAIO hopping solution in the MUROS technology, the BSS in this embodiment of the present invention sends standard frame selection information for selecting a standard frame to the MS, so that the MS can select a standard frame according to the standard frame selection information obtained from the BSS; the preset MAIO obtained from the BSS is set to be an MAIO of the MS in the standard frame, so that the preset MAIO in an optimum frequency reuse relationship can be set to be the MAIO of the MS in the standard frame. Thereby, the probability of random pairing in the MAIO hopping solution is adjusted adaptively, co-channel interference during the process of implementing the MAIO hopping solution in the MUROS technology is reduced, fluctuation of communication link performance with time is reduced, stability of signaling channels is improved, and therefore the call quality of the MS is guaranteed.

Further, the method of this embodiment may be applied in a procedure before a conversation, for example, a call establishment procedure, a call reestablishment procedure, a handover procedure, and a direct retry procedure, and may be applied in a call process. Specifically, the BSS can send standard frame selection information and a preset MAIO by sending a radio resource indication command message to the MS, that is, the radio resource indication command message sent by the BSS to the MS carries standard frame selection information and a preset MAIO. For example, in the call establishment procedure or call reestablishment procedure, the preceding radio resource indication command message may be an ASSIGNMENT COMMAND message; in the handover procedure or direct retry procedure, the preceding radio resource indication command message may be a HANDOVER COMMAND message; in the call process, the preceding radio resource indication command message may be a FREQUENCY REDEFINITION message.

FIG. 2 is a flowchart of a method for adjusting an MAIO according to a second embodiment of the present invention. As shown in FIG. 2, the method may include the following steps:
201. Obtain standard frame selection information and a preset MAIO.
202. Select a standard frame according to the standard frame selection information.
203. Set the preset MAIO to be an MAIO of the MS in the standard frame.

In this embodiment, frames may be classified into two types: ordinary frames and standard frames. That is, all frames except the standard frames are ordinary frames. By setting the preset MAIO to be the MAIO of the MS in the standard frame, periodic regression of the optimum pairing relationship determined by a BSS is implemented, therefore improving stability of signaling channels and reducing the risk of call drop caused by random pairing.

The standard frame selection information and preset MAIO in this embodiment are determined by the BSS; the BSS can determine, according to measurement of the radio environment in the cell, an optimum pairing relationship (frequency reuse relationship) for each MS and the preset MAIO of each MS that is used for implementing the optimum pairing relationship. Specifically, the optimum pairing relationship of the MS can be determined according to a communication parameter of the MS that reflect the call quality, for example, a CIR, PL, RXQUAL, an RXLEV, and cell load. The standard frame selection information may include a start frame number and an interval value so that the MS can, starting from the start frame corresponding to the start frame number, select an ordinary frame after an ordinary frame that is at an interval of the interval value as a standard frame.

During the process of implementing the MAIO hopping solution in the MUROS technology, the MS in this embodiment of the present invention selects a standard frame according to the standard frame selection information obtained from the BSS; the preset MAIO obtained from the BSS is set to be the MAIO of the MS in the standard frame, so that the preset MAIO in an optimum frequency reuse relationship can be set to be an MAIO of the MS in the standard frame. Thereby, the probability of random pairing in the MAIO hopping solution is adjusted adaptively, co-channel interference during the process of implementing the MAIO hopping solution in the MUROS technology is reduced, fluctuation of communication link performance with time is reduced, stability of signaling channels is improved, and therefore the call quality of the MS is guaranteed.

Further, the method of this embodiment may be applied in a procedure before a conversation, for example, a call establishment procedure, a call reestablishment procedure, a handover procedure, and a direct retry procedure, and may be applied in a call process. Specifically, the MS can obtain standard frame selection information and a preset MAIO by obtaining a radio resource indication command message from the BSS, that is, the radio resource indication command message received by the MS from the BSS carries standard frame selection information and a preset MAIO. For example, in the call establishment procedure or call reestablishment procedure, the preceding radio resource indication command message may be an ASSIGNMENT COMMAND message; in the handover procedure or direct retry procedure, the preceding radio resource indication command message may be a HANDOVER COMMAND message; in the call process, the preceding radio resource indication command message may be a FREQUENCY REDEFINITION message.

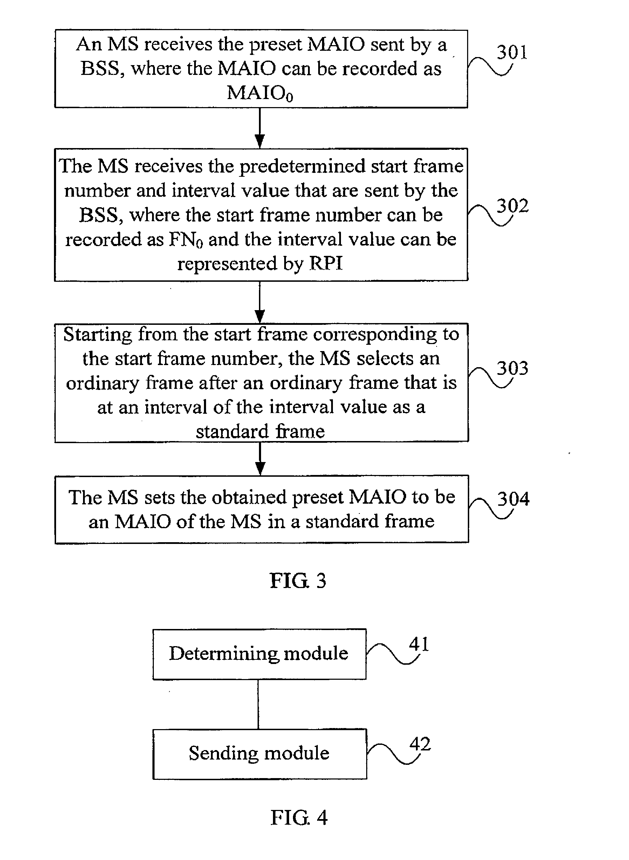

FIG. 3 is a flowchart of a method for adjusting an MAIO according to a third embodiment of the present invention. As shown in FIG. 3, the method may include the following steps:
301. MSs in set 2 receive the preset MAIO sent by a BSS, where the preset MAIO may be recorded as MAIO0.

Before this step, the BSS determines, according to the measurement of the radio environment in the cell, an optimum pairing relationship (frequency reuse relationship) for each MS in set 2 and the preset MAIO of each MS that is used for implementing the optimum pairing relationship, and sends the MAIO0 to the MS.

In this step, the BSS can determine an optimum pairing relationship for each MS according to communication parameters that reflect the call quality, for example, a CIR, PL, RXQUAL, an RXLEV, and cell load. For example, if the CIR of the MS4 in set 2 is high and is slightly different from the MS1 in set 1, when the MS4 is paired with the MS1, the pairing relationship may be regarded as the optimum pairing relationship of the MS4 in set 2. The corresponding MAIO0 can be determined according to the determined optimum pairing relationship.
302. The MS receives a predetermined start frame number and an interval value that are sent by the BSS. The start frame number may be recorded as FN0, and the interval value may be represented by a radio resource management (radio resource management, RRM) pairing interval (RRM Pairing Interval, RPI)

In should be noted that step 301 and step 302 have not a fixed execution sequence, they may be executed in a reverse sequence.
303. Starting from the start frame corresponding to the start frame number, the MS selects an ordinary frame after an ordinary frame that is at an interval of the interval value as a standard frame.

In step 303, the MS can select, starting from the start frame (including the start frame), a frame after every RPI ordinary frame as a standard frame so that a standard frame exists at an interval of a certain ordinary frame for the purpose of setting the MAIO of the MS in subsequent procedures.
304. The MS sets the obtained preset MAIO to be an MAIO of the MS in the standard frame.

In step 304, the MS sets the MAIO of the MS in the frame after every RPI frames namely, the MAIO of the MS in the standard frame to be MAIO0, but does not select the MAIO according to the MAIO hopping solution, that is the hopping MAIO. This can be regarded as "regression" of the pairing relationship determined by the RRM for the purpose of reducing the risk of random pairing. The RPI represents the probability of random pairing modifications caused by MAIO hopping, and each RPI value may define an MAIO hopping mode, and may be specified by the BSS according to the network environment.

Though the RPI may be any value theoretically, in actual applications, the RPI can be only one of a limited number of values according to experience. For example, the PRI can be encoded into two bits and represents four different values, where RPI = {0, 4, 8, ∞}.

Further, the MS in this embodiment may determine the frequency of the MS in the standard frame according to the preset MAIO. The frequency of the MS in other ordinary frame may be the frequency determined by the MAIO hopping solution; the MS may also determine the MAIO of the MS in other ordinary frame according to the received parameters sent by the BSS in the MAIO hopping solution, and further determine the frequency of the MS in other ordinary frame. For example, the MS receives the mobile allocation index offset allocation (MAIOA) and MAIO hopping sequence number (MAIOHSN) sent by the BSS, and the optional mobile allocation index offset permutation number (MAIOPN). The MS uses the method in the MAIO hopping solution to determine the hopped MAIO of the MS in the ordinary frame.

In this embodiment, during the process of using the MAIO hopping solution to implement the interference diversity of the MUROS technology, though the pairing relationship between the MS in set 2 and the MS in set 1 is random, the BSS can select an optimum pairing relationship corresponding to a specific MS from set 2, therefore, the performance of the MS in the pairing relationship is optimum. The BSS can dynamically determine, according to the change of the radio environment, the probability of reflecting the optimum pairing relationship for each MS in the MAIO hopping solution by assigning an RPI to each MS in set 2. Thereby, co-channel interference during the process of implementing the MAIO hopping solution in the MUROS technology is reduced, fluctuation of communication link performance with time is reduced, stability of signaling channels is improved, and therefore the call quality of the MS is guaranteed.

Further, the RPI in this embodiment can be different values according to the change of the radio environment of the network; the BSS can send an RPI to the MS to instruct the MS to switch to the new MAIO hopping mode. For example, in the network with a good radio environment, the BSS assigns RPI = ∞ to the MS in set 2; in this scenario, no standard frame exists, and all frames are ordinary frames, which is equivalent to the MAIO hopping solution. In the network with a poor radio environment, the BSS assigns RPI = 0 to the MS in set 2; in this scenario, no ordinary frame exists, and all frames are standard frames, which is equivalent to the frequency hopping solution in the prior art, that is, the solution of using the fixedly allocated MAIO.

The foregoing embodiment of the present invention can be applied in the channel assignment phase of any communication procedure; in the channel assignment phase, the BSS needs to send a preset MAIO (MAIO0) a start frame number (FN0), and an interval value (RPI) besides the MAIOA and MAIOHSN to the MS in set 2.

Further, the method of this embodiment may be applied in a procedure before a conversation, for example, a call establishment procedure, a call reestablishment procedure, a handover procedure, and a direct retry procedure, and may be applied in a call process. Specifically, the BSS can send a radio resource indication command message to the MS so that the MS can obtain the start frame number FN0, interval value RPI, and preset MAIO, that is, the radio resource indication command message sent by the BSS to the MS carries the start frame number FN0, interval value RPI, and preset MAIO. For example, in the call establishment procedure or call reestablishment procedure, the preceding radio resource indication command message may be an ASSIGNMENT COMMAND message, which may carry the FN0, RPI, and preset MAIO besides the MAIOA and MAIOHSN in the MAIO hopping solution, and the optional MAIOPN; in the handover procedure or direct retry procedure, the preceding radio resource indication command message may be a HANDOVER COMMAND message, which may carry the FN0, RPI, and preset MAIO besides the MAIOA and MAIOHSN in the MAIO hopping solution, and the optional MAIOPN; in the call process, the preceding radio resource indication command message may be a FREQUENCY REDEFINITION message, which may carry the FN0, RPI, and preset MAIO besides the MAIOA and MAIOHSN in the MAIO hopping solution, and the optional MAIOPN.

For ease of description in the method embodiments above, the method is described as a series of actions. Those skilled in the art know that the actions are not order-sensitive and some steps may be performed in other order or performed simultaneously. Meanwhile, those skilled in the art know that the embodiments described herein are exemplary embodiments, and that the involved actions and modules are not mandatory.

In the foregoing embodiments of the present invention, each embodiment has its emphasis. What is not detailed in one embodiment of the present invention is detailed in the related description of another embodiment.

FIG. 4 is a schematic structural diagram of a BSS according to a fourth embodiment of the present invention. As shown in FIG. 4, the BSS in this embodiment may include a determining module 41 and a sending module 42. The determining module 41 determines standard frame selection information and a preset MAIO; the sending module 42 sends the standard frame selection information and preset MAIO determined by the determining module 41 so as to enable the MS to select a standard frame according to the standard frame selection information and set the preset MAIO to be an MAIO of the MS in the standard frame.

In this embodiment, frames may be classified into two types: ordinary frames and standard frames. That is, all frames except the standard frames are ordinary frames.

The standard frame selection information and preset MAIO in this embodiment are determined by the determining module 41; the determining module 41 can determine, according to measurement of the radio environment in the cell, an optimum pairing relationship (frequency reuse relationship) for each MS and the preset MAIO of each MS that is used for implementing the optimum pairing relationship. Specifically, the determining module 41 can determine the optimum pairing relationship of the MS according to some communication parameters of the MS, for example, a CIR and PL. The standard frame selection information determined by the determining module 41 may include a start frame number and an interval value so that the MS can, starting from the start frame corresponding to the start frame number, select an ordinary frame after an ordinary frame that is at an interval of the interval value as a standard frame.

During the process of implementing the MAIO hopping solution in the MUROS technology, the sending module in this embodiment of the present invention sends the standard frame selection information determined by the determining module to the MS, so that the MS can select a standard frame according to the standard frame selection information obtained from the sending module; the preset MAIO obtained from the sending module is set to be an MAIO of the MS in the standard frame, so that the preset MAIO in the optimum frequency reuse relationship can be set to be the MAIO of the MS in the standard frame. Thereby, the probability of random pairing in the MAIO hopping solution is adjusted adaptively, co-channel interference during the process of implementing the MAIO hopping solution in the MUROS technology is reduced, fluctuation of communication link performance with time is reduced, stability of signaling channels is improved, and therefore the call quality of the MS is guaranteed.

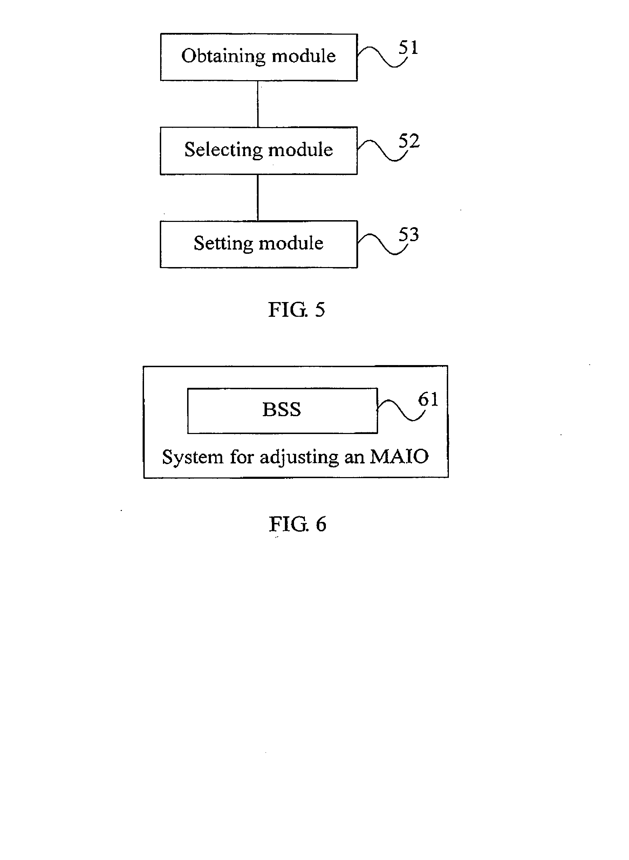

FIG. 5 is a schematic structural diagram of an MS according to a fifth embodiment of the present invention. As shown in FIG. 5, the MS in this embodiment may include an obtaining module 51, a selecting module 52, and a setting module 53. The obtaining module 51 obtains standard frame selection information and a preset MAIO; the selecting module 52 selects a standard according to the standard frame selection information obtained by the obtaining module 51; the setting module 53 sets the preset MAIO obtained by the obtaining module 51 to be an MAIO of the MS in the standard frame selected by the selecting module 52.

In this embodiment, frames may be classified into two types: ordinary frames and standard frames. That is, all frames except the standard frames are ordinary frames.

The standard frame selection information and preset MAIO in this embodiment are determined by the BSS; the BSS can determine, according to measurement of the radio environment in the cell, an optimum pairing relationship (frequency reuse relationship) for each MS and the preset MAIO of each MS that is used for implementing the optimum pairing relationship. Specifically, the BSS determines the optimum pairing relationship of the MS according to some communication parameters of the MS, for example, a CIR and PL. The standard frame selection information obtained by the obtaining module 51 may include a start frame number and an interval value so that the selecting module can, starting from the start frame corresponding to the start frame number, select an ordinary frame after an ordinary frame that is at an interval of the interval value as a standard frame.

During the process of implementing the MAIO hopping solution in the MUROS technology, the selecting module in this embodiment of the present invention selects a standard frame according to the standard frame selection information obtained from the BSS; the setting module sets the preset MAIO obtained by the obtaining module from the BSS to be an MAIO of the MS in the standard frame selected by the selecting module, so that the preset MAIO in the optimum frequency reuse relationship can be set to be the MAIO of the MS in the standard frame. Thereby, the probability of random pairing in the MAIO hopping solution is adjusted adaptively, co-channel interference during the process of implementing the MAIO hopping solution in the MUROS technology is reduced, fluctuation of communication link performance with time is reduced, stability of signaling channels is improved, and therefore the call quality of the MS is guaranteed.

FIG. 6 is a schematic structural diagram of a system for adjusting an MAIO according to a sixth embodiment of the present invention. As shown in FIG. 6, the system in this embodiment may include a BSS 61, configured to: determine standard frame selection information and a preset MAIO, and send the determined standard frame selection information and preset MAIO to the MS so that the MS can select a standard frame according to the obtained standard frame selection information and set the obtained preset MAIO to be the MAIO of the MS in the standard frame.

The methods of the first and second embodiments and the function of the BSS in the third embodiment can be implemented by the BSS 61 of the foregoing system.

It is understandable to those skilled in the art that all or a part of the steps of the foregoing embodiments can be implemented by hardware instructed by a program. The program may be stored in a computer-readable storage medium. When being executed, the program performs the steps of the foregoing method embodiments. The storage medium may be any medium capable of storing program codes, for example, a read only memory (ROM), a random access memory (RAM), a magnetic disk, and a compact disk-read only memory (CD-ROM).

## Claims

1. A method for adjusting a mobile allocation index offset, MAIO, **characterized by** comprising:
determining, by a Base Station Sub-system, BSS, standard frame selection information and a preset MAIO (101), wherein the standard frame selection information comprises: a start frame number and an interval value; and
sending, by the BSS, the standard frame selection information and the preset MAIO so as to enable a mobile station, MS, to select a standard frame according to the standard frame selection information and set the preset MAIO to be an MAIO of the MS in the standard frame (102), wherein to select a standard frame according to the standard frame selection information comprises: to select, starting from a start frame corresponding to the start frame number, an ordinary frame after an ordinary frame that is at an interval of the interval value as a standard frame, and wherein all frames except the standard frames are ordinary frames.

2. The method according to claim 1, wherein the determining the preset MAIO comprises: determining the preset MAIO according to a communication parameter of the MS that reflect call quality.

3. The method according to claim 1 or 2, wherein the sending the standard frame selection information and the preset MAIO comprises: sending the standard frame selection information and the preset MAIO through a radio resource indication command message.

4. A method for adjusting a mobile allocation index offset, MAIO, **characterized by** comprising:
obtaining, by a mobile station, MS, standard frame selection information and a preset MAIO (201);
selecting, by the MS, a standard frame according to the standard frame selection information (202); and
setting, by the MS, the preset MAIO to be an MAIO of the MS in the standard frame (203);
wherein the standard frame selection information comprises: a start frame number and an interval value; and the selecting the standard frame according to the standard frame selection information comprises: selecting, starting from a start frame corresponding to the start frame number, an ordinary frame after an ordinary frame that is at an interval of the interval value as a standard frame and wherein all frames except the standard frames are ordinary frames.

5. The method according to claim 4, wherein the obtaining the standard frame selection information and the preset MAIO comprises: obtaining the standard frame selection information and the preset MAIO through a radio resource indication command message.

6. A base station subsystem, BSS, **characterized by** comprising:
a determining module (41), configured to determine standard frame selection information and a preset mobile allocation index offset, MAIO, wherein the standard frame selection information comprises: a start frame number and an interval value; and
a sending module (42), configured to send the standard frame selection information and the preset MAIO so as to enable a mobile station, MS, to select a standard frame according to the standard frame selection information and set the preset MAIO to be an MAIO of the MS in the standard frame, wherein to select a standard frame according to the standard frame selection information comprises: to select, starting from a start frame corresponding to the start frame number, an ordinary frame after an ordinary frame that is at an interval of the interval value as a standard frame and wherein all frames except the standard frames are ordinary frames.

7. A mobile station, MS, **characterized by** comprising:
an obtaining module (51), configured to obtain standard frame selection information and a preset mobile allocation index offset, MAIO;
a selecting module (52), configured to select a standard frame according to the standard frame selection information; and
a setting module (53), configured to set the preset MAIO to be an MAIO of the MS in the standard frame;
wherein the standard frame selection information comprises: a start frame number and an interval value; and the selecting module is further configured to select, starting from a start frame corresponding to the start frame number, an ordinary frame after an ordinary frame that is at an interval of the interval value as a standard frame and wherein all frames except the standard frames are ordinary frames.

## Patentansprüche

1. Verfahren zum Anpassen eines mobilen Zuweisungsindexversatzes (mobile allocation index offset, MAIO), **dadurch gekennzeichnet, dass** es Folgendes umfasst:
Bestimmen durch ein Basisstationsteilsystem (Base Station Sub-system, BSS), von Standardrahmenauswahlinformationen und eines voreingestellten MAIO (101), wobei die Standardrahmenauswahlinformationen Folgendes umfassen: eine Startrahmennummer und einen Intervallwert; und
Senden durch das BSS der Standardrahmenauswahlinformationen und des voreingestellten MAIO, um zu ermöglichen, dass eine Mobilstation, MS, einen Standardrahmen gemäß den Standardrahmenauswahlinformationen auswählt und den voreingestellten MAIO einstellt, so dass er ein MAIO der MS in dem Standardrahmen ist (102), wobei das Auswählen eines Standardrahmens gemäß den Standardrahmenauswahlinformationen Folgendes umfasst: Auswählen, beginnend von einem Startrahmen, der der Startrahmennummer entspricht, eines gewöhnlichen Rahmens nach einem gewöhnlichen Rahmen, der an einem Intervall des Intervallwerts ist, als einen Standardrahmen, und wobei alle Rahmen außer den Standardrahmen gewöhnliche Rahmen sind.

2. Verfahren nach Anspruch 1, wobei das Bestimmen des voreingestellten MAIO Folgendes umfasst: Bestimmen des voreingestellten MAIO gemäß einem Kommunikationsparameter der MS, der die Verbindungsqualität widerspiegelt.

3. Verfahren nach Anspruch 1 oder 2, wobei das Senden der Standardrahmenauswahlinformationen und des voreingestellten MAIO Folgendes umfasst: Senden der Standardrahmenauswahlinformationen und des voreingestellten MAIO durch eine Funkbetriebsmittelkennzeichenbefehlsnachricht.

4. Verfahren zum Anpassen eines mobilen Zuweisungsindexversatzes, MAIO, **dadurch gekennzeichnet, dass** es Folgendes umfasst:
Erhalten von Standardrahmenauswahlinformationen und eines voreingestellten MAIO durch eine Mobilstation, MS (201);
Auswählen eines Standardrahmens gemäß den Standardrahmenauswahlinformationen durch die MS (202); und
Einstellen durch die MS des voreingestellten MAIO, so dass er ein MAIO der MS in dem Standardrahmen ist (203);
wobei die Standardrahmenauswahlinformationen Folgendes umfassen: eine Startrahmennummer und einen Intervallwert; und das Auswählen des Standardrahmens gemäß den Standardrahmenauswahlinformationen Folgendes umfasst: Auswählen, beginnend von einem Startrahmen, der der Startrahmennummer entspricht, eines gewöhnlichen Rahmens nach einem gewöhnlichen Rahmen, der an einem Intervall des Intervallwerts ist, als einen Standardrahmen, und wobei alle Rahmen außer den Standardrahmen gewöhnliche Rahmen sind.

5. Verfahren nach Anspruch 4, wobei das Erhalten der Standardrahmenauswahlinformationen und des voreingestellten MAIO Folgendes umfasst: Erhalten der Standardrahmenauswahlinformationen und des voreingestellten MAIO durch eine Funkbetriebsmittelkennzeichenbefehlsnachricht.

6. Basisstationsteilsystem, BSS, **dadurch gekennzeichnet, dass** es Folgendes umfasst:
ein Bestimmungsmodul (41), das konfiguriert ist Standardrahmenauswahlinformationen und einen voreingestellten mobilen Zuweisungsindexversatz, MAIO, zu bestimmen,
wobei die Standardrahmenauswahlinformationen Folgendes umfassen: eine Startrahmennummer und einen Intervallwert; und
ein Sendemodul (42), das konfiguriert ist, die Standardrahmenauswahlinformationen und den voreingestellten MAIO zu senden, um zu ermöglichen, dass eine Mobilstation, MS, einen Standardrahmen gemäß den Standardrahmenauswahlinformationen auswählt und den voreingestellten MAIO einstellt, so dass er ein MAIO der MS in dem Standardrahmen ist, wobei das Auswählen eines Standardrahmens gemäß den Standardrahmenauswahlinformationen Folgendes umfasst: Auswählen, beginnend von einem Startrahmen, der der Startrahmennummer entspricht, eines gewöhnlichen Rahmens nach einem gewöhnlichen Rahmen, der an einem Intervall des Intervallwerts ist, als einen Standardrahmen, und wobei alle Rahmen außer den Standardrahmen gewöhnliche Rahmen sind.

7. Mobilstation, MS, **dadurch gekennzeichnet, dass** sie Folgendes umfasst:
ein Erhaltemodul (51), das konfiguriert ist, Standardrahmenauswahlinformationen und einen voreingestellten mobilen Zuweisungsindexversatz, MAIO, zu erhalten;
ein Auswahlmodul (52), das konfiguriert ist, einen Standardrahmen gemäß den Standardrahmenauswahlinformationen auszuwählen; und
ein Einstellungsmodul (53), das konfiguriert ist, den voreingestellten MAIO einzustellen, so dass er ein MAIO der MS in dem Standardrahmen ist;
wobei die Standardrahmenauswahlinformationen Folgendes umfassen: eine Startrahmennummer und einen Intervallwert; und das Auswahlmodul ferner konfiguriert ist, beginnend von einem Startrahmen, der der Startrahmennummer entspricht, einen gewöhnlichen Rahmen nach einem gewöhnlichen Rahmen, der an einem Intervall des Intervallwerts ist, als einen Standardrahmen auszuwählen, und wobei alle Rahmen außer den Standardrahmen gewöhnliche Rahmen sind.

## Revendications

1. Procédé de réglage d'un MAIO (Mobile Allocation Index Offset - décalage d'indice attribué aux mobiles) **caractérisé en ce qu'**il comprend :
la détermination, par un sous-système de station de base, BSS, d'une information de sélection de trame standard et d'un MAIO prédéfini (101), dans lequel l'information de sélection de trame standard comprend : un numéro de trame de départ et une valeur d'intervalle ; et
l'envoi, par le BSS, de l'information de sélection de trame standard et du MAIO prédéfini de manière à permettre à une station mobile, MS, de sélectionner une trame standard en fonction de l'information de sélection de trame standard et de définir le MAIO prédéfini comme un MAIO de la MS dans la trame standard (102), dans lequel la sélection d'une trame standard en fonction de l'information de sélection de trame standard comprend : la sélection, en commençant par une trame de départ correspondant au numéro de trame de départ, d'une trame ordinaire après une trame ordinaire qui se trouve à un intervalle de la valeur d'intervalle comme trame standard, et dans lequel toutes les trames sauf les trames standard sont des trames ordinaires.

2. Procédé selon la revendication 1, dans lequel la détermination du MAIO prédéfini comprend : la détermination du MAIO prédéfini en fonction d'un paramètre de communication de la MS qui reflète la qualité de l'appel.

3. Procédé selon la revendication 1 ou 2, dans lequel l'envoi de l'information de sélection de trame standard et du MAIO prédéfini comprend : l'envoi de l'information de sélection de trame standard et du MAIO prédéfini par le biais d'un message de commande d'indication de ressource radio.

4. Procédé de réglage d'un MAIO (Mobile Allocation Index Offset - décalage d'indice attribué aux mobiles), **caractérisé en ce qu'**il comprend :
l'obtention, par une MS, d'une information de sélection de trame standard et d'un MAIO prédéfini (201) ;
la sélection, par la MS, d'une trame standard en fonction de l'information de sélection de trame standard (202) ; et
la définition, par la MS, du MAIO prédéfini comme un MAIO de la MS dans la trame standard (203) ;
dans lequel l'information de sélection de trame standard comprend : un numéro de trame de départ et une valeur d'intervalle ; et la sélection de la trame standard en fonction de l'information de sélection de trame standard comprend : la sélection, en commençant par une trame de début correspondant au numéro de trame de départ, d'une trame ordinaire après une trame ordinaire qui se trouve à un intervalle de la valeur d'intervalle comme trame standard, et dans lequel toutes les trames sauf les trames standard sont des trames ordinaires.

5. Procédé selon la revendication 4, dans lequel l'obtention de l'information de sélection de trame standard et du MAIO prédéfini comprend : l'obtention de l'information de sélection de trame standard et du MAIO prédéfini par le biais d'un message de commande d'indication de ressource radio.

6. Sous-système de station de base, BSS, **caractérisé en ce qu'**il comprend :
un module de détermination (41), configuré pour déterminer une information de sélection de trame standard et un MAIO (Mobile Allocation Index Offset - décalage d'indice attribué aux mobiles) prédéfini, dans lequel l'information de sélection de trame standard comprend : un numéro de trame de départ et une valeur d'intervalle ; et
un module d'envoi (42), configuré pour envoyer l'information de sélection de trame standard et le MAIO prédéfini de manière à permettre à une station mobile, MS, de sélectionner une trame standard en fonction de l'information de sélection de trame standard et de définir le MAIO prédéfini comme un MAIO de la MS dans la trame standard, dans lequel la sélection d'une trame standard en fonction de l'information de sélection de trame standard comprend : la sélection, en commençant par une trame de début correspondant au numéro de trame de départ, d'une trame ordinaire après une trame ordinaire qui se trouve à un intervalle de la valeur d'intervalle comme trame standard, et
dans lequel toutes les trames sauf les trames standard sont des trames ordinaires.

7. Station mobile, MS, **caractérisée en ce qu'**elle comprend :
un module d'obtention (51), configuré pour obtenir une information de sélection de trame standard et un MAIO (Mobile Allocation Index Offset - décalage d'indice attribué aux mobiles) prédéfini ;
un module de sélection (52), configuré pour sélectionner une trame standard en fonction de l'information de sélection de trame standard ; et
un module de définition (53), configuré pour définir le MAIO prédéfini comme un MAIO de la MS dans la trame standard ;
dans laquelle l'information de sélection de trame standard comprend : un numéro de trame de départ et une valeur d'intervalle ; et le module de sélection est configuré en outre pour sélectionner, en commençant par une trame de début correspondant au numéro de trame de départ, une trame ordinaire après une trame ordinaire qui se trouve à un intervalle de la valeur d'intervalle comme trame standard, et dans laquelle toutes les trames sauf les trames standard sont des trames ordinaires.
